# EUROPEAN PATENT APPLICATION

(11) **EP 4 306 852 A1**
(43) Date of publication of application: **17.01.2024**
(21) Application number: 21930339.3
(22) Date of filing: 15.12.2021
(51) Int. Cl.: F23G 5/44, F23G 5/50, G08B 21/02, G08B 25/00, G08B 25/04, G06T 7/00, G06T 7/20, H04N 7/18

(54) **FALLEN PERSON DETECTION SYSTEM, FALLEN PERSON DETECTION METHOD, AND FALLEN PERSON DETECTION PROGRAM**

(30) Priority: 12.03.2021 JP 2021040498
(71) Applicant: Ebara Environmental Plant Co., Ltd., Tokyo 144-0042 (JP)
(72) Inventor: MACHIDA Junya, Tokyo 144-0042 (JP); MATSUOKA Kei, Tokyo 144-0042 (JP); SAKAI Mihoko, Tokyo 144-0042 (JP)
(74) Representative: Klang, Alexander H.
(86) International application number: PCT/JP2021/046200
(87) International publication number: WO 2022/190494

(57) **Abstract**

A fallen person detection system includes: a first image data acquisition unit for acquiring first image data from a first camera for capturing inside of a storage facility where an object to be processed is stored; a second image data acquisition unit for acquiring second image data from a second camera for capturing inside of a platform that is adjacent to the storage facility; a first image analysis unit for detecting a person inside the storage facility by performing image analysis on the first image data; a second image analysis unit for detecting a person inside the platform by performing image analysis on the second image data, and for tracking a trajectory of the person who is detected; and a fallen person determination unit for determining presence/absence of a fallen person fallen from the platform into the storage facility, based on a combination of an analysis result for the first image data and an analysis result for the second image data.

## Description

### Technical Field

The present disclosure relates to a fallen person detection system, a fallen person detection method, and a fallen person detection program for automatically detecting a person who fell into a facility for storing an object to be processed.

### Background Art

In waste treatment-related facilities, especially in waste incineration facilities, accidents of a person falling into a waste bunker are reported several times a year, although the number of cases is small.

When a person falls into a waste bunker, a notification has to be issued to a crane operator or the like, and crane operation has to be suspended to secure safety of the fallen person. However, these days, an autonomous driving technology for cranes is advancing, and for example, in the case where there is occurrence of a fallen person during autonomous crane driving (that is, when the crane operator is not present), notification to the crane operator or the like may take time, and serious accidents may occur.

Furthermore, especially in the case of waste incineration facilities, there is no accident prevention system for automatically detecting a person who has fallen into a waste bunker and for controlling a crane, for example.

In other fields (especially, in a railway field), a system for detecting, by image processing or the like, a person who has fallen onto a railway track from a platform at a station is used (for example, see Japanese Patent No. 5386744, and Japanese Patent No. 4041678).

### Summary of Invention

A fallen person detection system used in the railway field detects a fallen person by processing images from a surveillance camera that simultaneously captures a platform, which is a fall start side, and a railway track, which is a fall end side. In contrast, at a waste incineration facility, a waste loading door separates a platform, which is the cause side of the fall, and a waste bunker, which is the result side of the fall, and thus, it is difficult to install a capturing device such as a camera at a location from which the cause side of the fall and fall end side can be captured at the same time.

Moreover, a fallen person detection system used in the railway field sometimes uses a method of determining a size of a fallen object by processing an image from a surveillance camera, and of determining whether the fallen object is a person or not based on the size. In contrast, at a waste incineration facility, waste of various sizes is thrown into a waste bunker from conveying vehicles (such as garbage trucks and pickup trucks), and it is difficult to determine whether a fallen object is a person or not based just on the size of the fallen object.

Furthermore, as described above, at a waste incineration facility, it is difficult to install a camera at a location from which the cause side of the fall (the platform) and the result side of the fall (the waste bunker) can be captured at the same time, and thus, it is conceivable to install a camera on the waste bunker side, and to process an image of inside of the waste bunker and detect a fallen person. However, in the waste bunker, a pile of waste may collapse and the waste may cover a fallen person from above, and in such a case, it is difficult to detect the fallen person by processing an image of inside of the waste bunker.

Additionally, such problems arise not only in a facility that adopts a bunker-and-crane method, such as an incineration facility, but also in waste treatment facilities (such as a bulky waste shredding facility or a recycling facility) that adopt methods other than the bunker-and-crane method, such as a method of directly loading into a storage facility or a compactor container method.

A fallen person detection system, a fallen person detection method, and a fallen person detection program that are capable of automatically detecting a fallen person in a storage facility for storing waste at a waste treatment facility such as a waste incineration facility are desired to be provided.

A fallen person detection system according to an aspect of the present disclosure includes:
a first image data acquisition unit for acquiring first image data from a first camera for capturing inside of a storage facility where an object to be processed is stored;
a second image data acquisition unit for acquiring second image data from a second camera for capturing inside of a platform that is adjacent to the storage facility;
a first image analysis unit for detecting a person inside the storage facility by performing image analysis on the first image data;
a second image analysis unit for detecting a person inside the platform by performing image analysis on the second image data, and for tracking a trajectory of the person who is detected; and
a fallen person determination unit for determining presence/absence of a fallen person fallen from the platform into the storage facility, based on a combination of an analysis result for the first image data and an analysis result for the second image data.

A fallen person detection method according to an aspect of the present disclosure includes the steps of:
acquiring first image data from a first camera for capturing inside of a storage facility where an object to be processed is stored;
acquiring second image data from a second camera for capturing inside of a platform that is adjacent to the storage facility;
detecting a person inside the storage facility by performing image analysis on the first image data;
detecting a person inside the platform by performing image analysis on the second image data, and tracking a trajectory of the person who is detected; and
determining presence/absence of a fallen person fallen from the platform into the storage facility, based on a combination of an analysis result for the first image data and an analysis result for the second image data.

### Brief Description of Drawings

[Figure 1] Figure 1 is a schematic diagram showing a structure of a waste treatment facility according to an embodiment.
[Figure 2] Figure 2 is a block diagram showing a configuration of a fallen person detection system according to the embodiment.
[Figure 3] Figure 3 is a flowchart showing a first example of a fallen person detection method by the fallen person detection system according to the embodiment.
[Figure 4A] Figure 4A is a diagram showing an example of an analysis result for second image data capturing inside of a platform.
[Figure 4B] Figure 4B is a diagram showing an example of an analysis result for first image data capturing inside of a waste bunker.
[Figure 5] Figure 5 is a flowchart showing a second example of the fallen person detection method by the fallen person detection system according to the embodiment.
[Figure 6A] Figure 6A is a diagram showing an example of the analysis result for the first image data capturing the inside of the waste bunker.
[Figure 6B] Figure 6B is a diagram showing an example of the analysis result for the second image data capturing the inside of the platform.

### Description of Embodiment

A fallen person detection system according to a first mode of an embodiment includes:
a first image data acquisition unit for acquiring first image data from a first camera for capturing inside of a storage facility where an object to be processed is stored;
a second image data acquisition unit for acquiring second image data from a second camera for capturing inside of a platform that is adjacent to the storage facility;
a first image analysis unit for detecting a person inside the storage facility by performing image analysis on the first image data;
a second image analysis unit for detecting a person inside the platform by performing image analysis on the second image data, and for tracking a trajectory of the person who is detected; and
a fallen person determination unit for determining presence/absence of a fallen person fallen from the platform into the storage facility, based on a combination of an analysis result for the first image data and an analysis result for the second image data.

According to such a mode, a fallen person fallen from the platform into the storage facility may be automatically detected by combining the analysis result for the first image data capturing the inside of the storage facility and the analysis result for the second image data capturing the inside of the platform. Generally, in the case of detecting a fallen person from image data by using a machine learning model, it is not possible to detect the fallen person with 100% accuracy because detection accuracy of the machine learning model is varied, but detection accuracy for the fallen person can be increased by combining the analysis result for the first image data capturing the inside of the storage facility and the analysis result for the second image data capturing the inside of the platform. Moreover, even in an existing facility, the present system can be operated simply by additionally installing the first camera for capturing the inside of the storage facility and the second camera for capturing the inside of the platform, and thus, the existing facility does not have to be greatly modified to introduce the present system, and safety of the existing facility can be increased at a low cost.

A fallen person detection system according to a second mode of the embodiment is the fallen person detection system according to the first mode, where the fallen person determination unit checks the analysis result for the second image data, and in a case where entry of a person into a predetermined area near a loading door separating the storage facility and the platform is detected at a first time point, checks an analysis result for the first image data corresponding to the first time point, and determines presence of the fallen person in a case where a person is detected inside the storage facility.

According to such a mode, a fallen person can be accurately detected by checking the analysis result for the second image data capturing the inside of the platform, checking the analysis result for the first image data in a case where entry of a person into the predetermined area near the loading door is detected (that is, in a case where a fallen person is provisionally detected in the analysis result for the second image data), and finally determining presence of a fallen person in a case where a person is detected in the storage facility (that is, in a case where a fallen person is provisionally detected also in the analysis result for the first image data).

A fallen person detection system according to a third mode of the embodiment is the fallen person detection system according to the second mode, where, in a case where entry of a person into the predetermined area near the loading door is detected at the first time point, the fallen person determination unit checks an analysis result for an image capturing an area, inside the storage facility, corresponding to a position of the loading door, among the first image data corresponding to the first time point.

According to such a mode, even in a case of a large storage facility with a plurality of loading doors, the analysis result for the second image data capturing the inside of the platform is checked, and in a case where entry of a person into the predetermined area near the loading doors is detected (that is, in a case where a fallen person is provisionally detected in the analysis result for the second image data), an analysis result for an image of an area, inside the storage facility, corresponding to a position of the loading door where there is a high possibility of occurrence of a fallen person is checked instead of checking the analysis result for the whole first image data capturing the inside of the storage facility, and thus, a fallen person can be more accurately detected in a shorter time.

A fallen person detection system according to a fourth mode of the embodiment is the fallen person detection system according to the second or third mode, where the fallen person determination unit extracts a difference between the first image data corresponding to the first time point and the first image data corresponding to a second time point that is after a predetermined time from the first time point in a case where a person is not detected inside the storage facility when checking the analysis result for the first image data corresponding to the first time point, determines presence of the fallen person in a case where the difference that is extracted exceeds a predetermined threshold, and determines absence of the fallen person in a case where there is no difference.

According to such a mode, for example, in a case where the object to be processed covers the fallen person from above inside the storage facility, even though a person is not detected inside the storage facility according to the analysis result for the first image data capturing the inside of the storage facility (due to the object to be processed covering the fallen person from above), because the fallen person is already provisionally detected in the analysis result for the second image data, the first image data corresponding to the first time point and the first image data corresponding to the second time point that is after the predetermined time from the first time point are compared and a difference is extracted. Furthermore, in the case where the difference between the first image data at the first time point and the first image data at the second time point exceeds the predetermined threshold, presence of the fallen person is determined by assuming that a pile of objects to be processed collapsed inside the storage facility, for example, and that there is a possibility that the collapsed pile of objects to be processed is covering the fallen person from above and hiding the fallen person. Accordingly, even in a case where the object to be processed covers a fallen person from above inside the storage facility, the fallen person can be automatically detected.

A fallen person detection system according to a fifth mode of the embodiment is the fallen person detection system according to the first mode, where the fallen person determination unit checks the analysis result for the first image data, and in a case where a person is detected inside the storage facility at the first time point, checks the analysis result for the second image data for up to a predetermined time before the first time point, and determines presence of the fallen person in a case where a person moved out of a frame of a video from a position inside a predetermined area near a loading door separating the storage facility and the platform.

According to such a mode, the analysis result for the first image data capturing the inside of the storage facility is checked, and in a case where a person is detected inside the storage facility (that is, in a case where a fallen person is provisionally detected in the analysis result for the first image data), the analysis result for the second image data is checked, and in a case where a person moved out of the frame of the video from near the loading door (that is, in a case where a fallen person is also provisionally detected in the analysis result for the second image data), presence of a fallen person is finally determined, and a fallen person may thereby be accurately detected.

A fallen person detection system according to a sixth mode of the embodiment is the fallen person detection system according to the fifth mode, where, in a case where a person is detected inside the storage facility at the first time point, the fallen person determination unit checks an analysis result for an image, among the second image data for up to the predetermined time before the first time point, capturing the loading door at a position corresponding to an area inside the storage facility where the person is detected.

According to such a mode, even in a case of a large platform with a plurality of loading doors, the analysis result for the first image data capturing the inside of the storage facility is checked, and in a case where a person is detected inside the storage facility (that is, in a case where a fallen person is provisionally detected in the analysis result for the first image data), an analysis result for an image of the loading door that is at a position where there is a high possibility of occurrence of a fallen person is checked instead of checking the analysis result for the whole second image data capturing the inside of the platform, and thus, a fallen person can be more accurately detected in a shorter time.

A fallen person detection system according to a seventh mode of the embodiment is the fallen person detection system according to the fifth or sixth mode, where the fallen person determination unit determines absence of the fallen person in a case where a person moves out of the frame of the video from a position outside the predetermined area near the loading door when checking the analysis result for the second image data for up to the predetermined time before the first time point.

According to such a mode, erroneous determination of presence of a fallen person can be prevented in a case where a person moves out of a frame of a video in the second image data capturing the inside of the platform due to a reason other than a fall into the storage facility (for example, due to being temporarily hidden behind a conveying vehicle), and accuracy of detection of a fallen person can be increased.

A fallen person detection system according to an eighth mode of the embodiment is the fallen person detection system according to any one of the fifth to seventh modes, where the fallen person determination unit determines absence of the fallen person in a case where entry of a person into the predetermined area near the loading door is not detected when checking the analysis result for the second image data for up to the predetermined time before the first time point.

According to such a mode, for example, even in a case where an object to be processed or the like that is about the same size as a person is erroneously detected as a person in the first image data capturing the inside of the storage facility (that is, even in a case where a fallen person is erroneously provisionally detected in the analysis result for the first image data), absence of a fallen person is determined if entry of a person near the loading door is not detected when checking the analysis result for the second image data capturing the inside of the platform, and thus, erroneous determination of presence of a fallen person can be prevented, and accuracy of detection of a fallen person can be increased.

A fallen person detection system according to a ninth mode of the embodiment is the fallen person detection system according to any one of the first to eighth modes, further including an instruction unit for performing at least one of processes in a case where presence of the fallen person is determined by the fallen person determination unit, the processes including
(1) issuing an alert,
(2) transmitting a control signal to a crane control device such that a crane for mixing or conveying the object to be processed that is stored in the storage facility is stopped,
(3) transmitting a control signal to a loading door control device such that a loading door separating the storage facility and the platform is closed,
(4) transmitting a control signal to the crane control device such that the crane is operated to rescue the fallen person, and
(5) transmitting a control signal to a rescue equipment control device such that rescue equipment provided at the storage facility is operated to rescue the fallen person.

According to such a mode, a fallen person can be swiftly rescued, and safety of the facility can be increased.

A fallen person detection system according to a tenth mode of the embodiment is the fallen person detection system according to any one of the first to ninth modes, where the first image analysis unit detects a person inside the storage facility by using a first detection algorithm and taking new image data of the inside of the storage facility as an input, the first detection algorithm being constructed by performing machine learning on first training data that is prepared by adding an artificial label, as information, to past image data of the inside of the storage facility, the artificial label being added to an area including a person or a dummy doll representing a person.

A fallen person detection system according to an eleventh mode of the embodiment is the fallen person detection system according to any one of the first to tenth modes, where the second image analysis unit detects a person inside the platform by using a second detection algorithm and taking new image data of the inside of the platform as an input, the second detection algorithm being constructed by performing machine learning on second training data that is prepared by adding an artificial label, as information, to past image data of the inside of the platform, the artificial label being added to an area including a person or a dummy doll representing a person.

A fallen person detection system according to a twelfth mode of the embodiment is the fallen person detection system according to the eleventh mode, where the second training data is prepared by adding the artificial label, as information, to the area including a person or a dummy doll representing a person and by adding another artificial label, as information, to an area including a conveying vehicle, the artificial labels being added to past image data of the inside of the platform.

According to such a mode, because a person (such as a worker) frequently works near a conveying vehicle inside the platform and there is a relationship between a position of the person and a position of the conveying vehicle, using the second detection algorithm that is constructed by performing machine learning on training data that is prepared by adding, to past image data of the inside of the platform, an artificial label that is added, as information, to an area including a person or a dummy doll representing a person and another artificial label that is added, as information, to an area including a conveying vehicle allows detection accuracy of a person inside the platform to be increased and also allows detection of a fall of the conveying vehicle.

A fallen person detection system according to a thirteenth mode of the embodiment is the fallen person detection system according to the tenth mode, where the first detection algorithm includes one or two or more among the statistical estimation using maximum likelihood classification, a Boltzmann machine, a neural network, a support vector machine, a Bayesian network, sparse regression, a decision tree, and random forest, reinforcement learning, and deep learning.

A fallen person detection system according to a fourteenth mode of the embodiment is the fallen person detection system according to the eleventh or twelfth mode, where the second detection algorithm includes one or two or more among the statistical estimation using the maximum likelihood classification, the Boltzmann machine, the neural network, the support vector machine, the Bayesian network, the sparse regression, the decision tree, and the random forest, the reinforcement learning, and the deep learning.

A fallen person detection system according to a fifteenth mode of the embodiment is the fallen person detection system according to any one of the first to fourteenth modes, where an algorithm used by the second image analysis unit to track the trajectory of the person includes one or two or more among an optical flow, background subtraction, a Kalman filter, a particle filter, and deep learning.

A fallen person detection system according to a sixteenth mode of the embodiment is the fallen person detection system according to any one of the first to fifteenth modes, where the first camera includes one or two or more among an RGB camera, a near-infrared camera, a 3D camera, or an RGB-D camera.

A fallen person detection system according to a seventeenth mode of the embodiment is the fallen person detection system according to any one of the first to sixteenth modes, where the second camera includes one or two or more among the RGB camera, the near-infrared camera, the 3D camera, or the RGB-D camera.

A waste treatment facility according to an eighteenth mode of the embodiment includes the fallen person detection system according to any one of the first to seventeenth modes.

A fallen person detection method according to a nineteenth mode of the embodiment includes the steps of:
acquiring first image data from a first camera for capturing inside of a storage facility where an object to be processed is stored;
acquiring second image data from a second camera for capturing inside of a platform that is adjacent to the storage facility;
detecting a person inside the storage facility by performing image analysis on the first image data;
detecting a person inside the platform by performing image analysis on the second image data, and tracking a trajectory of the person who is detected; and
determining presence/absence of a fallen person fallen from the platform into the storage facility, based on a combination of an analysis result for the first image data and an analysis result for the second image data.

A non-transitory computer-readable recording medium according to a twentieth mode of the embodiment stores a fallen person detection program for causing a computer to perform:
acquiring first image data from a first camera for capturing inside of a storage facility where an object to be processed is stored;
acquiring second image data from a second camera for capturing inside of a platform that is adjacent to the storage facility;
detecting a person inside the storage facility by performing image analysis on the first image data;
detecting a person inside the platform by performing image analysis on the second image data, and tracking a trajectory of the person who is detected; and
determining presence/absence of a fallen person fallen from the platform into the storage facility, based on a combination of an analysis result for the first image data and an analysis result for the second image data.

In the following, specific examples of the embodiment will be described in detail with reference to the appended drawings. Additionally, in the following description and the drawings referred to in the following description, parts that may be identically configured are denoted by a same reference sign, and redundant description is omitted.

### (Structure of Waste Treatment Facility)

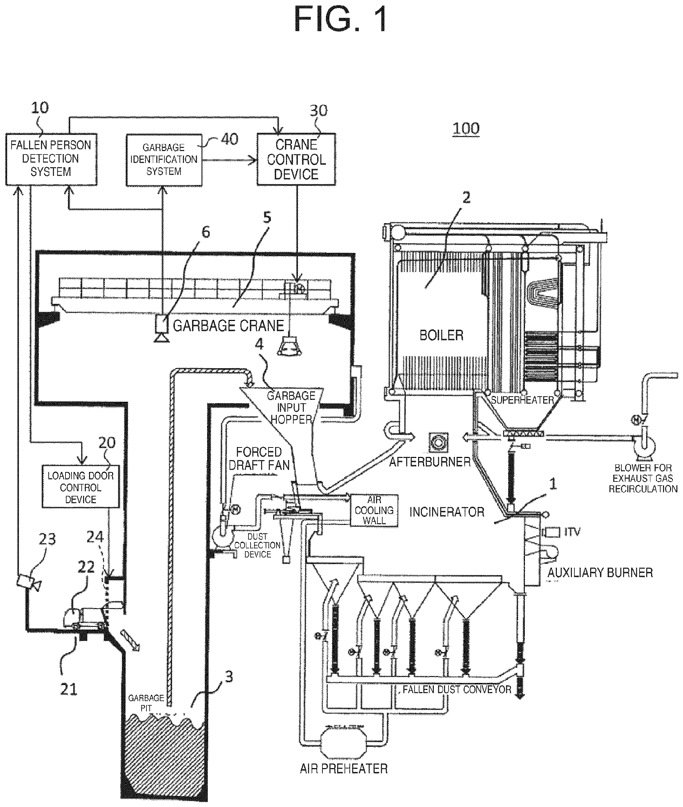

Figure 1 is a schematic diagram showing a structure of a waste treatment facility 100 according to an embodiment.

As shown in Figure 1, the waste treatment facility 100 includes a platform 21 where a conveying vehicle (such as a packer vehicle or a pickup truck) 22 carrying waste stops, a waste bunker (a storage facility) 3 where waste thrown in from the platform 21 is stored, a crane 5 for mixing and conveying waste stored in the waste bunker 3, a hopper 4 where waste conveyed by the crane 5 is thrown in, an incinerator 1 for burning waste thrown in from the hopper 4, and a heat recovery boiler 2 for recovering waste heat from exhaust gas prepared in the incinerator 1. The incinerator 1 is not limited to a stoker furnace as shown in Figure 1, and may alternatively be a fluidized incinerator (also referred to as a fluidized bed incinerator). Furthermore, a structure of the waste bunker 3 is not limited to a single-bunker structure as shown in Figure 1, and may alternatively be a double-bunker structure where the waste bunker is divided into a loading section and a storage section. The waste bunker 3 and the platform 21 are separated by a loading door 24. Furthermore, the waste treatment facility 100 is provided with a loading door control device 20 for controlling operation of the loading door 24, and a crane control device 30 for controlling operation of the crane 5.

Waste that is loaded on and conveyed by the conveying vehicle 22 is thrown from the platform 21 into the waste bunker 3 through the loading door 24, and is stored in the waste bunker 3. The waste that is stored in the waste bunker 3 is mixed by the crane 5 and conveyed to the hopper 4 by the crane 5, and is thrown into the incinerator 1 through the hopper 4 to be burned inside the incinerator 1.

As shown in Figure 1, the waste treatment facility 100 is provided with a first camera 6 for capturing inside of the waste bunker 3, and a waste identification system 40 for identifying type of waste inside the waste bunker 3.

The first camera 6 is disposed above the waste bunker 3, and in the illustrated example, the first camera 6 is fixed to a rail of the crane 5 and is able to capture waste stored inside the waste bunker 3 from above the waste bunker 3. One or a plurality of first cameras 6 may be installed.

The first camera 6 may be an RGB camera for outputting a shape and color image data of waste as a captured result, or a near-infrared camera for outputting near-infrared image data of waste as a captured result, or a 3D camera or an RGB-D camera for capturing three-dimensional image data of waste as a captured result, or may be a combination of two or more among those listed above.

The waste identification system 40 acquires image data from the first camera 6 (also referred to as first image data) capturing the inside of the waste bunker 3, performs image analysis on the first image data, and identifies the type of waste stored in the waste bunker 3. For example, the waste identification system 40 may identify the type of waste stored in the waste bunker 3 by using an identification algorithm (a trained model) and taking new image data of the inside of the waste bunker 3 as an input, the identification algorithm being constructed by performing machine learning on training data obtained by labeling past image data capturing the inside of the waste bunker 3 with the type of waste.

The waste identification system 40 generates, as an identification result for the type of waste stored in the waste bunker 3, a map displaying a ratio of types of waste on a per-area basis, and transmits the map to the crane control device 30. The crane control device 30 operates the crane 5 based on the map received from the waste identification system 40 so that the waste inside the waste bunker 3 is mixed such that the ratio of types of waste becomes the same in all the areas. Autonomous driving of the crane 5 is thus enabled.

More specifically, as the waste identification system 40, an information processing apparatus described in Japanese Patent No. 6731680 may be used, for example.

As shown in Figure 1, the waste treatment facility 100 is further provided with a second camera 23 for capturing inside of the platform 21, and a fallen person detection system 10 for detecting a fallen person fallen from the platform 21 into the waste bunker 3.

The second camera 23 is disposed above the platform 21, and in the illustrated example, the second camera 23 is fixed to a wall of the platform 21, at a position near a front of the loading door 24 and is able to capture the inside of the platform 21 from near the front of the loading door 24. One or a plurality of second cameras 23 may be installed.

The second camera 23 may be an RGB camera for outputting a shape and color image data of a target object (such as a person such as a worker, or the conveying vehicle 22) as a captured result, or a near-infrared camera for outputting near-infrared image data of the target object as a captured result, or a 3D camera or an RGB-D camera for capturing three-dimensional image data of the target object as a captured result, or may be a combination of two or more among those listed above.

### (Configuration of Fallen Person Detection System)

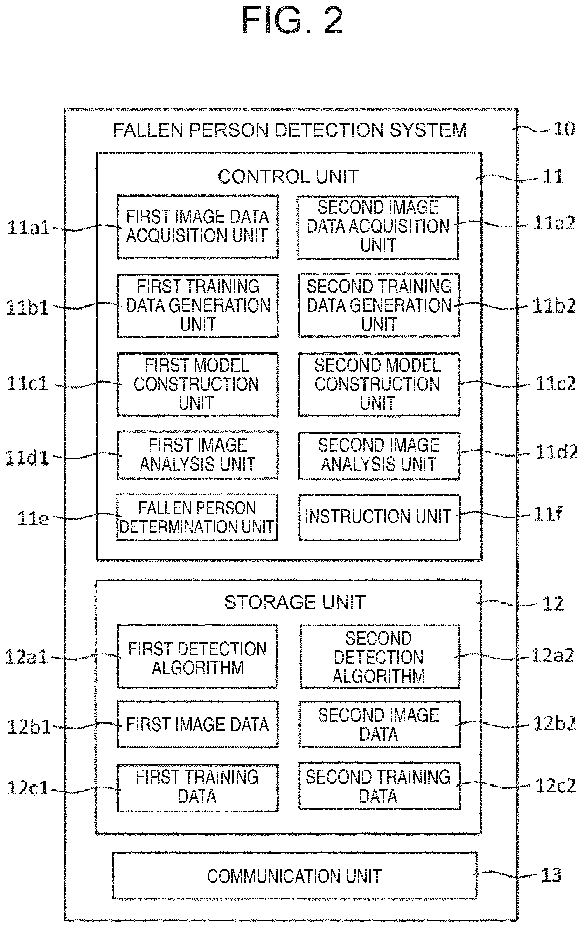

Next, a configuration of the fallen person detection system 10 for detecting a fallen person fallen from the platform 21 into the waste bunker 3 will be described. Figure 2 is a block diagram showing the configuration of the fallen person detection system 10. The fallen person detection system 10 may include one computer, or may include a plurality of computers that are communicably connected to each other.

As shown in Figure 2, the fallen person detection system 10 includes a control unit 11, a storage unit 12, and a communication unit 13. The units are communicably connected to one another by a bus or a network.

Of the units, the communication unit 13 is a communication interface for the first camera 6, the second camera 23, the crane control device 30, and the loading door control device 20. The communication unit 13 performs transmission/reception of information between each of the first camera 6, the second camera 23, the crane control device 30, and the loading door control device 20, and the fallen person detection system 10.

The storage unit 12 is a non-volatile data storage such as a hard disk or a flash memory. The storage unit 12 stores various types of data that are handled by the control unit 11. The storage unit 12 further stores a first detection algorithm 12a1 constructed by a first model construction unit 11c1, a second detection algorithm 12a2 constructed by a second model construction unit 11c2, first image data 12b1 acquired by a first image data acquisition unit 11a1, second image data 12b2 acquired by a second image data acquisition unit 11a2, first training data 12c1 prepared by a first training data generation unit 11b1, and second training data 12c2 prepared by a second training data generation unit 11b2, as described below.

The control unit 11 is control means for performing various processes of the fallen person detection system 10. As shown in Figure 2, the control unit 11 includes the first image data acquisition unit 11a1, the second image data acquisition unit 11a2, the first training data generation unit 11b1, the second training data generation unit 11b2, the first model construction unit 11c1, the second model construction unit 11c2, a first image analysis unit 11d1, a first image analysis unit 11d2, a fallen person determination unit 11e, and an instruction unit 11f. Each of the units may be implemented through execution of a predetermined program by a processor of the fallen person detection system 10, or may be implemented by hardware.

Of the units, the first image data acquisition unit 11a1 acquires the first image data from the first camera 6 that captures the inside of the waste bunker 3. The first image data may be a moving image, or may be continuous still images. A frame rate of the first image data may be a general frame rate (about 30 fps), and does not have to be a particularly high frame rate and may be a low frame rate (about 5 to 10 fps). Metadata of the first image data includes information about a capturing date/time. The first image data 12b1 acquired by the first image data acquisition unit 11a1 is stored in the storage unit 12.

The second image data acquisition unit 11a2 acquires the second image data from the second camera 23 that captures the inside of the platform 21. The second image data may be a moving image, or may be continuous still images. A frame rate of the second image data may be a general frame rate (about 30 fps), and does not have to be a particularly high frame rate and may be a low frame rate (about 5 to 10 fps). Metadata of the second image data includes information about a capturing data/time. The second image data 12b2 acquired by the second image data acquisition unit 11a2 is stored in the storage unit 12.

The first training data generation unit 11b1 generates first training data by labeling past image data capturing the inside of the waste bunker 3 with information about an area including a person (that is, a fallen person) or a dummy doll representing a person visually identified by a skilled operator operating the waste incineration facility 100 (that is, by adding an artificial label, as information, to the area including the person or the dummy doll representing a person). For example, the first training data generation unit 11b1 may generate the first training data in relation to image data capturing the inside of the waste bunker 3 after a dummy doll representing a person is intentionally thrown into the waste bunker 3, or may generate the first training data in relation to image data (combined image data) obtained by combining an image of a person with past image data capturing the inside of the waste bunker 3. The first training data generation unit 11b1 may also generate the first training data by labeling past image data capturing the inside of the waste bunker 3 with information about the area including a person (that is, a fallen person) or a dummy doll representing a person visually identified by a skilled operator operating the waste incineration facility 100 and information about an area including the conveying vehicle 22 (that is, by adding an artificial label, as information, to the area including a person or a dummy doll representing a person and to the area including the conveying vehicle). The information about the area including a person or a dummy doll representing a person and the information about the area including the conveying vehicle 22 are superimposed as layers on the image data, for example, and labeling is thus performed (that is, the artificial labels are added as information). The first training data 12c1 prepared by the first training data generation unit 11b1 is stored in the storage unit 12.

The second training data generation unit 11b2 generates second training data by labeling past image data capturing the inside of the platform 21 with information about an area including a person or a dummy doll representing a person visually identified by a skilled operator operating the waste incineration facility 100 (that is, by adding an artificial label, as information, to the area including a person or a dummy doll representing a person). For example, the second training data generation unit 11b2 may generate the second training data in relation to image data capturing the inside of the platform 21 after a dummy doll representing a person is intentionally placed inside the platform 21, or may generate the second training data in relation to image data (combined image data) obtained by combining an image of a person with past image data capturing the inside of the platform 21. The second training data generation unit 11b2 may also generate the second training data by labeling past image data capturing the inside of the waste bunker 3 with information about the area including a person or a dummy doll representing a person visually identified by a skilled operator operating the waste incineration facility 100 and information about an area including the conveying vehicle 22 (that is, by adding an artificial label, as information, to the area including a person or a dummy doll representing a person and to the area including the conveying vehicle). Because a person (such as a worker) frequently works near the conveying vehicle 22 inside the platform 21 and there is a relationship between a position of the person and a position of the conveying vehicle 22, when the second model construction unit 11c2 described later constructs the second detection algorithm 12a2 by performing machine learning on training data obtained by adding, to the image data capturing the inside of the platform 21, an artificial label that is added, as information, to an area including a person or a dummy doll representing a person and another artificial label that is added, as information, to an area including the conveying vehicle 22, the detection accuracy of a person inside the platform 21 by the second detection algorithm 12a2 can be increased, and also, a fall of the conveying vehicle 22 can be detected. The information about the area including a person or a dummy doll representing a person and the information about the area including the conveying vehicle 22 are superimposed as layers on the image data, for example, and labeling is thus performed (that is, the artificial labels are added as information). The second training data 12c2 prepared by the second training data generation unit 11b2 is stored in the storage unit 12.

The first model construction unit 11c1 constructs the first detection algorithm 12a1 (a trained model) for detecting a person inside the waste bunker 3 (that is, a fallen person) by performing machine learning on the first training data 12c1 stored in the storage unit 12 and by taking new image data of the inside of the waste bunker 3 as an input. The first detection algorithm 12a1 may include one or two or more among the statistical estimation using maximum likelihood classification, a Boltzmann machine, a neural network, a support vector machine, a Bayesian network, sparse regression, a decision tree, and random forest, reinforcement learning, and deep learning. The first detection algorithm 12a1 constructed by the first model construction unit 11c1 is stored in the storage unit 12.

The second model construction unit 11c2 constructs the second detection algorithm 12a2 (a trained model) for detecting a person inside the platform 21 by performing machine learning on the second training data 12c2 stored in the storage unit 12 and by taking new image data of the inside of the platform 21 as an input. The second detection algorithm 12a2 may include one or two or more among the statistical estimation using maximum likelihood classification, a Boltzmann machine, a neural network, a support vector machine, a Bayesian network, sparse regression, a decision tree, and random forest, reinforcement learning, and deep learning. The second detection algorithm 12a2 constructed by the second model construction unit 11c2 is stored in the storage unit 12.

The first image analysis unit 11d1 detects a person inside the waste bunker 3 by performing image analysis on the first image data acquired by the first image data acquisition unit 11a1. More specifically, for example, the first image analysis unit 11d detects a person inside the waste bunker 3 by using the first detection algorithm 12a1 (the trained model) constructed by the first model construction unit 11c1 and by taking new image data of the inside of the waste bunker 3 as an input. As a modification, the first image analysis unit 11d1 may instead detect a person and the conveying vehicle 22 inside the waste bunker 3 by performing image analysis on the first image data acquired by the first image data acquisition unit 11a1. More specifically, for example, the first image analysis unit 11d may detect each of a person and the conveying vehicle 22 inside the waste bunker 3 by using the first detection algorithm 12a1 (the trained model) constructed by the first model construction unit 11c1 and by taking new image data of the inside of the waste bunker 3 as an input.

The first image analysis unit 11d1 may divide a surface of the waste bunker 3 into a plurality of blocks, input new image data of the inside of the waste bunker 3 to the first detection algorithm 12a1 (the trained model) on a per-block basis, and acquire a detection result for a person (or a person and the conveying vehicle 22) on a per-block basis. This allows a location of occurrence of a fallen person (or a fallen person and a fall of the conveying vehicle 22) inside the waste bunker 3 to be accurately grasped.

The second image analysis unit 11d2 detects a person inside the platform 21 by performing image analysis on the second image data acquired by the second image data acquisition unit 11a2, and tracks a trajectory of the person who is detected. More specifically, for example, the second image analysis unit 11d detects a person inside the platform 21 by using the second detection algorithm 12a2 (the trained model) constructed by the second model construction unit 11c2 and by taking new image data of the inside of the platform 21 as an input. Next, the second image analysis unit 11d tracks the person who is detected, and detects entry of the person into a predetermined area near the loading door 24. As a modification, the second image analysis unit 11d2 detects each of a person and the conveying vehicle 22 inside the platform 21 by performing image analysis on the second image data acquired by the second image data acquisition unit 11a2, and tracks trajectories of the person and the conveying vehicle 22 that are detected. More specifically, for example, the second image analysis unit 11d detects each of a person and the conveying vehicle 22 inside the platform 21 by using the second detection algorithm 12a2 (the trained model) constructed by the second model construction unit 11c2 and by taking new image data of the inside of the platform 21 as an input. Next, the second image analysis unit 11d tracks each of the person and the conveying vehicle 22 that are detected, and detects entry of the person and the conveying vehicle 22 into the predetermined area near the loading door 24. An algorithm used for tracking may include one or two or more among an optical flow, background subtraction, a Kalman filter, a particle filter, and deep learning.

As a modification, the second image analysis unit 11d2 may detect a person inside the platform 21 by performing image analysis on the second image data acquired by the second image data acquisition unit 11a2 and detect the trajectory of the person who is detected, and may also detect, by image processing, whether the person who is detected is wearing safety equipment (a safety belt or a helmet) and determine whether there is a person who is working near the loading door 24 without wearing the safety equipment. Furthermore, in the case where it is determined that there is a person who is working near the loading door 24 without wearing the safety equipment, the instruction unit 11f described later may issue an alert (an alarm), or may transmit a control signal to the loading door control device 20 to not open the loading door 24 (if closed) or to close the loading door 24 (if open).

The fallen person determination unit 11e determines presence/absence of a fallen person fallen from the platform 21 into the waste bunker 3, based on a combination of an analysis result for the first image data from the first image analysis unit 11d1 and an analysis result for the second image data from the second image analysis unit 11d2. Generally, in the case of detecting a fallen person from image data by using a machine learning model, it is not possible to detect the fallen person with 100% accuracy because detection accuracy of the machine learning model is varied, but in the present embodiment, detection accuracy for the fallen person can be increased by combining the analysis result for the first image data capturing the inside of the waste bunker 3 and the analysis result for the second image data capturing the inside of the platform 21.

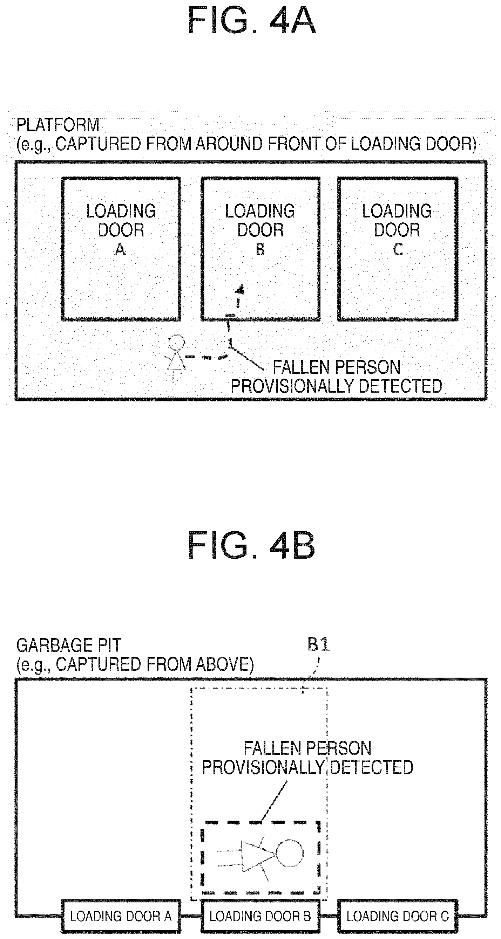

For example, the fallen person determination unit 11e first checks the analysis result for the second image data, and in a case where, as shown in Figure 4A, entry of a person into a predetermined area near the loading door 24 is detected at a first time point (that is, in a case where a fallen person is provisionally detected in the analysis result for the second image data), checks the analysis result for the first image data corresponding to the first time point, and may finally determine presence of a fallen person in a case where, as shown in Figure 4B, a person is detected inside the waste bunker 3 (that is, in a case where a fallen person is also provisionally detected in the analysis result for the first image data). A fallen person can thereby be accurately detected.

In a case where, as shown in Figure 4A, entry of a person into a predetermined area near the loading door 25 (in the illustrated example, a loading door B) is detected at the first time point, the fallen person determination unit 11e may, as shown in Figure 4B, check the analysis result for an image, among the first image data corresponding to the first time point, capturing an area (an area surrounded by a dash-dotted line denoted by a reference sign B1 in Figure 4B) inside the waste bunker 3 corresponding to a position of the loading door in question (that is, the loading door B). Accordingly, even in a case of a large waste bunker 3 where a plurality of loading doors 24 are provided, when the analysis result for the second image data capturing the inside of the platform 21 is checked and entry of a person into the predetermined area near the loading door B is detected, the analysis result for the image of the area B1, inside the waste bunker 3, corresponding to the position of the loading door B where there is a high possibility of occurrence of a fallen person is checked instead of checking the analysis result for the whole first image data capturing the inside of the waste bunker 3, and a fallen person can be more accurately detected in a shorter time.

Furthermore, in a case where a person is not detected inside the waste bunker 3 when checking the analysis result for the first image data corresponding to the first time point, the fallen person determination unit 11e may compare the first image data corresponding to the first time point and the first image data corresponding to a second time point that is after a predetermined time (such as five minutes) from the first time point and extract a difference, and may determine presence of a fallen person in a case where the difference between the first image data corresponding to the first time point and the first image data corresponding to the second time point exceeds a predetermined threshold, and may determine absence of a fallen person in a case where there is no difference. The reason is as follows. That is, for example, in a case where waste covers a fallen person from above inside the waste bunker 3, a person is not detected inside the waste bunker 3 according to the analysis result for the first image data (due to waste covering the fallen person from above), but because a fallen person is already provisionally detected in the analysis result for the second image data, the first image data corresponding to the first time point and the first image data corresponding to the second time point are further compared and a difference therebetween is extracted. Then, in the case where the difference between the first image data corresponding to the first time point and the first image data corresponding to the second time point exceeds a predetermined threshold, it can be assumed that a pile of waste collapsed inside the waste bunker 3, for example, and it can be assumed that there is a possibility that a fallen person is hidden under the collapsed pile of waste covering the fallen person from above, and thus, presence of a fallen person is determined. Accordingly, even in a case where waste covers a fallen person from above inside the waste bunker 3, the fallen person can be automatically detected.

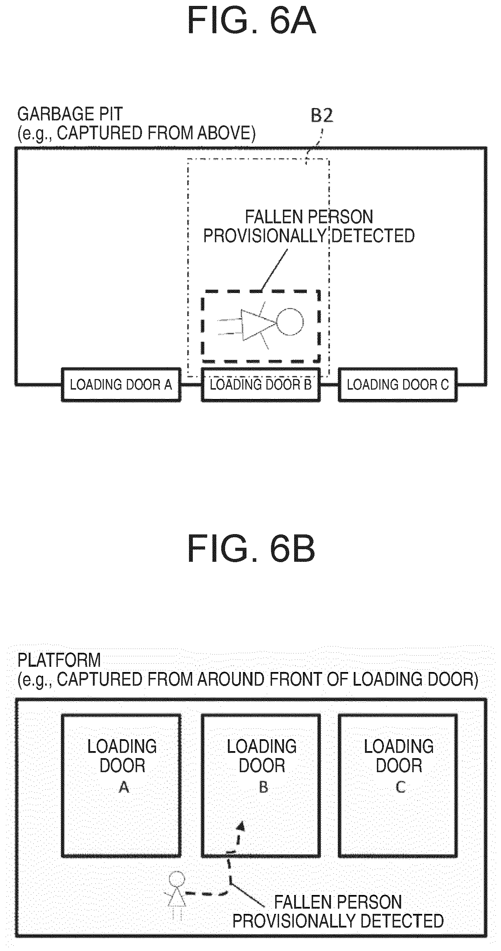

As a modification, the fallen person determination unit 11e may first check the analysis result for the first image data, and in a case where, as shown in Figure 6A, a person is detected inside the waste bunker 3 at the first time point (that is, in a case where a fallen person is provisionally detected in the analysis result for the first image data), the fallen person determination unit 11e may check the analysis result for the second image data for up to a predetermined time (such as five minutes) before the first time point, and may finally determine presence of a fallen person in a case where, as shown in Figure 6B, a person moved out of a frame of a video from a position inside a predetermined area near the loading door 24 (that is, in a case where a fallen person is also provisionally detected in the analysis result for the second image data). A fallen person can thereby be accurately detected.

In a case where, as shown in Figure 6A, a person is detected inside the waste bunker 3 at the first time point, the fallen person determination unit 11e may, as shown in Figure 6B, check the analysis result for an image, among the second image data for up to a predetermined time (such as five minutes) before the first time point, capturing a loading door (in the illustrated example, the loading door B) that is at a position corresponding to an area where the person is detected inside the waste bunker 3 (an area surrounded by a dash-dotted line denoted by a reference sign B2 in Figure 6A). Accordingly, even in a case of a large platform 21 where a plurality of loading doors 24 are provided, when the analysis result for the first image data capturing the inside of the waste bunker 3 is checked and a person is detected inside the waste bunker 3, the analysis result for the image of the loading door B at a position where there is a high possibility of occurrence of a fallen person is checked instead of checking the analysis result for the whole second image data capturing the inside of the platform 21, and a fallen person can be more accurately detected in a shorter time.

Furthermore, the fallen person determination unit 11e may determine absence of a fallen person in a case where, when checking the analysis result for the second image data for up to a predetermined time (such as five minutes) before the first time point, a person moves out of a frame of a video from a position outside the predetermined area near the loading door 24. Accordingly, erroneous determination of presence of a fallen person can be prevented in a case where a person moves out of a frame of a video in the second image data capturing the inside of the platform 21 due to a reason other than a fall into the waste bunker 3 (for example, due to being temporarily hidden behind the conveying vehicle 22), and accuracy of detection of a fallen person can be increased.

Furthermore, the fallen person determination unit 11e may determine absence of a fallen person in a case where, when checking the analysis result for the second image data for up to a predetermined time (such as five minutes) before the first time point, entry of a person into the predetermined area near the loading door 24 is not detected. Accordingly, for example, even in a case where waste having about the same size as a person is erroneously detected as a person in the first image data capturing the inside of the waste bunker 3 (that is, a fallen person is erroneously provisionally detected in the analysis result for the first image data), absence of a fallen person is detected if entry of a person near the loading door 24 is not detected when checking the analysis result for the second image data capturing the inside of the platform 21, and thus, erroneous determination of presence of a fallen person can be prevented, and accuracy of detection of a fallen person can be increased.

The instruction unit 11f checks a determination result from the fallen person determination unit 11e, and in a case where presence of a fallen person is determined by the fallen person determination unit 11e, the instruction unit 11f performs at least one of the following processes:
(1) issue an alert (an alarm),
(2) transmit a control signal to the crane control device 30 such that the crane 5 for mixing or conveying waste that is stored in the waste bunker 3 is stopped,
(3) transmit a control signal to the loading door control device 20 such that the loading door 24 separating the waste bunker 3 and the platform 21 is closed,
(4) transmit a control signal to the crane control device 30 such that the crane 5 is operated to rescue the fallen person, and
(5) transmit a control signal to a rescue equipment control device (not shown) such that rescue equipment (not shown) provided at the waste bunker 3 is operated to rescue the fallen person.
Accordingly, even in a case where there is occurrence of a fallen person during autonomous driving of the crane 5 (that is, when a crane operator is not present), the fallen person can be swiftly rescued, and safety of the facility can be increased.

### (First Example of Fallen Person Detection Method)

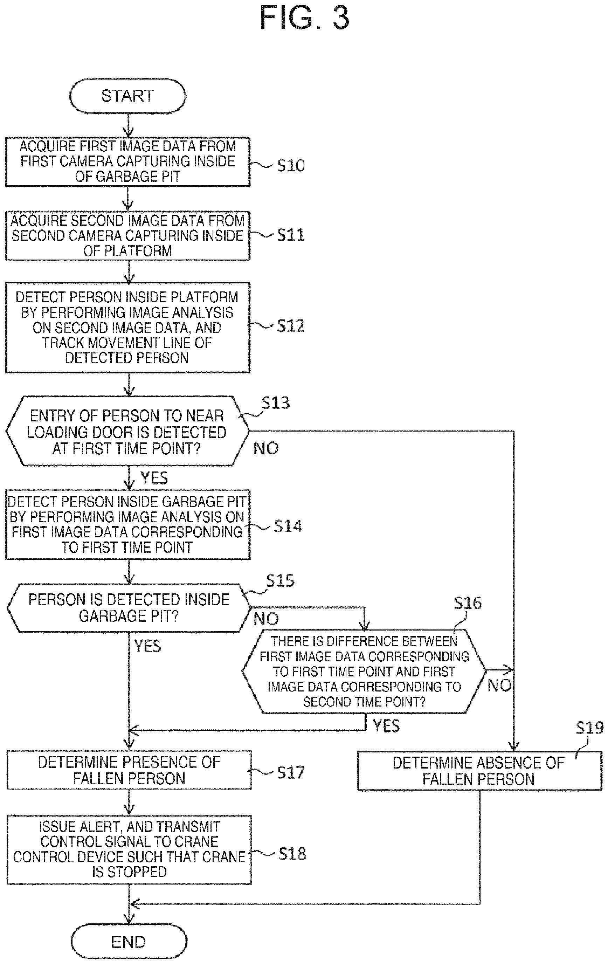

Next, a first example of a fallen person detection method of the fallen person detection system 10 having a configuration as described above will be described. Figure 3 is a flowchart showing the first example of the fallen person detection method.

As shown in Figure 3, first, the first image data acquisition unit 11a1 acquires the first image data from the first camera 6 that captures the inside of the waste bunker 3 (step S10). The first image data 12b1 that is acquired is stored in the storage unit 12.

Next, the second image data acquisition unit 11a2 acquires the second image data from the second camera 23 that captures the inside of the platform 21 (step S11). The first image data 12b2 that is acquired is stored in the storage unit 12. Additionally, the order of step S10 and S11 is not relevant, and the steps may alternatively be performed at the same time.

Next, the second image analysis unit 11d2 detects a person inside the platform 21 by performing image analysis on the second image data acquired by the second image data acquisition unit 11a2, and tracks a trajectory of the person who is detected (step S12).

The fallen person determination unit 11e checks the analysis result for the second image data from the second image analysis unit 11d2 (step S13).

In a case where entry of a person into the predetermined area near the loading door 24 is not detected (that is, in a case where a fallen person is not provisionally detected in the analysis result for the second image data) at a first time point (step S13: NO), the fallen person determination unit 11e determines absence of a fallen person (step S19).

In contrast, in a case where, as shown in Figure 4A, entry of a person into the predetermined area near the loading door 24 is detected (that is, in a case where a fallen person is provisionally detected in the analysis result for the second image data) at the first time point (step S13: YES), the first image analysis unit 11d1 detects a person inside the waste bunker 3 by performing image analysis on the first image data corresponding to the first time point acquired by the first image data acquisition unit 11a1 (step S14).

Then, the fallen person determination unit 11e checks the analysis result for the first image data corresponding to the first time point from the first image analysis unit 11d1 (step S15). At this time, in a case where, as shown in Figure 4A, entry of a person into the predetermined area near the loading door 25 (in the illustrated example, the loading door B) is detected at the first time point, the fallen person determination unit 11e may check the analysis result for an image, among the first image data corresponding to the first time point, capturing the area (the area surrounded by the dash-dotted line denoted by the reference sign B1 in Figure 4B) inside the waste bunker 3 corresponding to a position of the loading door in question (that is, the loading door B) as shown in Figure 4B.

As shown in Figure 4B, in a case where a person is detected inside the waste bunker 3 (that is, in a case where a fallen person is also provisionally detected in the analysis result for the first image data) (step 15: YES), the fallen person determination unit 11e determines presence of a fallen person (step S17).

In contrast, in a case where a person is not detected inside the waste bunker 3 (that is, in a case where a fallen person is not provisionally detected in the analysis result for the first image data) (step 15: NO), the fallen person determination unit 11e extracts a difference between the first image data corresponding to the first time point and the first image data corresponding to the second time point that is after a predetermined time (such as five minutes) from the first time point, and compares the difference that is extracted with a predetermined threshold (step S16).

In a case where the difference between the first image data corresponding to the first time point and the first image data corresponding to the second time point exceeds the predetermined threshold (step S16: YES), it can be assumed that a pile of waste collapsed inside the waste bunker 3, for example, and it can be assumed that there is a possibility that a fallen person is hidden under the collapsed pile of waste covering the fallen person from above, and thus, the fallen person determination unit 11e determines presence of a fallen person (step S17).

In contrast, in a case where the difference between the first image data corresponding to the first time point and the first image data corresponding to the second time point does not exceed the predetermined threshold (step S16: NO), the fallen person determination unit 11e determines absence of a fallen person (step S19) .

In a case where presence of a fallen person is determined by the fallen person determination unit 11e (after step S17), the instruction unit 11f issues an alert (an alarm) to issue a notification to other workers, and transmits a control signal to the crane control device 30 such that the crane 5 is stopped (step S18) .

In step S18, the instruction unit 11f may transmit a control signal to the loading door control device 20 such that the loading door 24 separating the waste bunker 3 and the platform 21 is closed, so as to prevent rescue from becoming difficult due to waste being thrown onto the fallen person. Furthermore, instead of transmitting a control signal to the crane control device 30 such that the crane 5 is stopped, the instruction unit 11f may transmit a control signal to the crane control device 30 such that the crane 5 is operated to rescue the fallen person. Furthermore, the instruction unit 11f may transmit a control signal to the rescue equipment control device (not shown) such that rescue equipment (not shown) provided at the waste bunker 3 is operated to rescue the fallen person. Accordingly, even when there is occurrence of a fallen person during autonomous driving of the crane 5 (that is, when the crane operator is not present), the fallen person can be swiftly rescued.

### (Second Example of Fallen Person Detection Method)

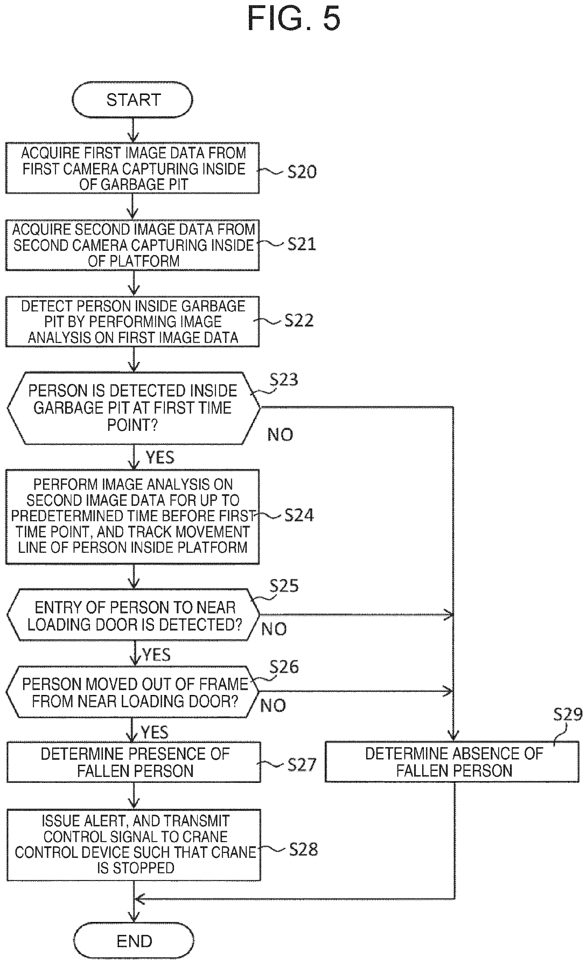

Next, a second example of the fallen person detection method of the fallen person detection system 10 will be described. Figure 5 is a flowchart showing the second example of the fallen person detection method.

As shown in Figure 5, first, the first image data acquisition unit 11a1 acquires the first image data from the first camera 6 that captures the inside of the waste bunker 3 (step S20). The first image data 12b1 that is acquired is stored in the storage unit 12.

Next, the second image data acquisition unit 11a2 acquires the second image data from the second camera 23 that captures the inside of the platform 21 (step S21). The first image data 12b2 that is acquired is stored in the storage unit 12. Additionally, the order of step S20 and S21 is not relevant, and the steps may alternatively be performed at the same time.

Next, the first image analysis unit 11d1 detects a person inside the waste bunker 3 by performing image analysis on the first image data acquired by the first image data acquisition unit 11a1 (step S22).

The fallen person determination unit 11e checks the analysis result for the first image data from the first image analysis unit 11d1 (step S23).

In a case where a person is not detected inside the waste bunker 3 at a first time point (that is, in a case where a fallen person is not provisionally detected in the analysis result for the first image data) (step S23: NO), the fallen person determination unit 11e determines absence of a fallen person (step S29).

In contrast, in a case where, as shown in Figure 6A, a person is detected inside the waste bunker 3 at the first time point (that is, in a case where a fallen person is provisionally detected in the analysis result for the first image data) (step S23: YES), the second image analysis unit 11d2 detects a person inside the platform 21 by performing image analysis on the second image data for up to a predetermined time (such as five minutes) before the first time point, among the second image data acquired by the second image data acquisition unit 11a2, and tracks the trajectory of the person who is detected (step S24).

Then, the fallen person determination unit 11e determines whether entry of a person into a predetermined area near the loading door 24 is detected in the analysis result for the second image data from the second image analysis unit 11d2 (step S25). In a case where, as shown in Figure 6A, a person is detected inside the waste bunker 3 at the first time point, the fallen person determination unit 11e may, as shown in Figure 6B, check the analysis result for an image, among the second image data for up to a predetermined time (such as five minutes) before the first time point, capturing the loading door (in the illustrated example, the loading door B) at a position corresponding to the area inside the waste bunker 3 where the person is detected (the area surrounded by the dash-dotted line denoted by the reference sign B2 in Figure 6A).

In a case where entry of a person into the predetermined area near the loading door 24 is not detected (that is, in a case where a fallen person is not provisionally detected in the analysis result for the second image data) (step S25: NO), the fallen person determination unit 11e determines absence of a fallen person (step S29).

In contrast, in a case where, as shown in Figure 6A, entry of a person into the predetermined area near the loading door 24 is detected in the analysis result for the second image data (step S25: YES), the fallen person determination unit 11e checks whether, in the analysis result for the second image data, a person moved out of a frame of a video from a position inside a predetermined area near the loading door 24 (step S26).

In a case where a person moved out of a frame of a video from a position inside the predetermined area near the loading door 24 (in a case where a fallen person is also provisionally detected in the analysis result for the second image data) (step S26: YES), the fallen person determination unit 11e determines presence of a fallen person (step S27).

In contrast, in a case where a person did not move out of a frame of a video from a position inside the predetermined area near the loading door 24 (step S26: NO), the fallen person determination unit 11e determines absence of a fallen person (step S29).

In a case where presence of a fallen person is determined by the fallen person determination unit 11e (after step S27), the instruction unit 11f issues an alert (an alarm) to issue a notification to other workers, and transmits a control signal to the crane control device 30 such that the crane 5 is stopped (step S28) .

In step S28, the instruction unit 11f may transmit a control signal to the loading door control device 20 such that the loading door 24 separating the waste bunker 3 and the platform 21 is closed, so as to prevent rescue from becoming difficult due to waste being thrown onto the fallen person. Furthermore, instead of transmitting a control signal to the crane control device 30 such that the crane 5 is stopped, the instruction unit 11f may transmit a control signal to the crane control device 30 such that the crane 5 is operated to rescue the fallen person. Furthermore, the instruction unit 11f may transmit a control signal to the rescue equipment control device (not shown) such that rescue equipment (not shown) provided at the waste bunker 3 is operated to rescue the fallen person. Accordingly, even when there is occurrence of a fallen person during autonomous driving of the crane 5 (that is, when the crane operator is not present), the fallen person can be swiftly rescued.

Now, because, in the waste incineration facility, the platform 21, which is a fall start side, and the waste bunker 3, which is a fall end side, are separated by the waste loading door 24, it is difficult to install a capturing device such as a camera at a position from which the cause side of the fall and the result side of the fall can be captured at the same time, as in the case of a fallen person detection system used in the railway field.

In this regard, according to the present embodiment, even when a camera is not installed at a position from which the cause side of the fall and the result side of the fall can be captured at the same time, a fallen person fallen from the platform 21 into the waste bunker 3 can be automatically detected by acquiring the first image data from the first camera 6 capturing the inside of the waste bunker 3, which is the result side of the fall, and acquiring the second image data from the second camera 23 capturing the inside of the platform 21, which is the cause side of the fall, and by combining the analysis result for the first image data capturing the inside of the waste bunker 3 and the analysis result for the second image data capturing the inside of the platform 21.

Generally, in the case of detecting a fallen person from image data by using a machine learning model, it is not possible to detect the fallen person with 100% accuracy because detection accuracy of the machine learning model is varied, but in the present embodiment, detection accuracy for the fallen person can be increased by combining the analysis result for the first image data capturing the inside of the waste bunker 3 and the analysis result for the second image data capturing the inside of the platform 21.

Furthermore, according to the present embodiment, even in an existing facility, the present system can be operated simply by additionally installing the first camera 6 for capturing the inside of the waste bunker 3 and the second camera 23 for capturing the inside of the platform 21, and thus, the existing facility does not have to be greatly modified to introduce the present system, and safety of the existing facility can be increased at a low cost.

Additionally, in the embodiment described above, the waste treatment facility 100 where the fallen person detection system 10 is provided is a facility where the waste identification system 40 is provided, and autonomous driving of the crane 5 is performed based on an identification result from the waste identification system 40, but such a case is not restrictive, and the waste treatment facility 100 where the fallen person detection system 10 is provided may be a facility where the waste identification system 40 is not provided.

Moreover, in the embodiment described above, the fallen person detection system 10 determines presence/absence of a fallen person based on a combination of the analysis result for the first image data capturing the inside of the waste bunker 3 and the analysis result for the second image data capturing the inside of the platform 21, but if sufficient detection accuracy can be obtained by only the analysis result for the first image data, presence/absence of a fallen person may be determined based only on the analysis result for the first image data, and if sufficient detection accuracy can be obtained by only the analysis result for the second image data, presence/absence of a fallen person may be determined based only on the analysis result for the second image data.

Heretofore, the embodiment and the modifications have been described using examples, but the scope of the present technology is not limited thereto, and changes and modifications can be made within the scope described in the claims according to objectives. Furthermore, the embodiment and the modifications can be combined as appropriate to the extent that no conflicts exist regarding processing contents.

Furthermore, the fallen person detection system 10 according to the present embodiment may be configured by one or more computers, and a program for causing one or more computers to implement the fallen person detection system 10 and a non-transitory recording medium storing the program are also protected by the present application.

## Claims

1. A fallen person detection system comprising:
a first image data acquisition unit for acquiring first image data from a first camera for capturing inside of a storage facility where an object to be processed is stored;
a second image data acquisition unit for acquiring second image data from a second camera for capturing inside of a platform that is adjacent to the storage facility;
a first image analysis unit for detecting a person inside the storage facility by performing image analysis on the first image data;
a second image analysis unit for detecting a person inside the platform by performing image analysis on the second image data, and for tracking a trajectory of the person who is detected; and
a fallen person determination unit for determining presence/absence of a fallen person fallen from the platform into the storage facility, based on a combination of an analysis result for the first image data and an analysis result for the second image data.

2. The fallen person detection system according to claim 1, wherein the fallen person determination unit checks the analysis result for the second image data, and in a case where entry of a person into a predetermined area near a loading door separating the storage facility and the platform is detected at a first time point, checks an analysis result for the first image data corresponding to the first time point, and determines presence of the fallen person in a case where a person is detected inside the storage facility.

3. The fallen person detection system according to claim 2, wherein, in a case where entry of a person into the predetermined area near the loading door is detected at the first time point, the fallen person determination unit checks an analysis result for an image capturing an area, inside the storage facility, corresponding to a position of the loading door, among the first image data corresponding to the first time point.

4. The fallen person detection system according to claim 2 or 3, wherein the fallen person determination unit extracts a difference between the first image data corresponding to the first time point and the first image data corresponding to a second time point that is after a predetermined time from the first time point in a case where a person is not detected inside the storage facility when checking the analysis result for the first image data corresponding to the first time point, determines presence of the fallen person in a case where the difference that is extracted exceeds a predetermined threshold, and determines absence of the fallen person in a case where there is no difference.

5. The fallen person detection system according to claim 1, wherein the fallen person determination unit checks the analysis result for the first image data, and in a case where a person is detected inside the storage facility at the first time point, checks the analysis result for the second image data for up to a predetermined time before the first time point, and determines presence of the fallen person in a case where a person moved out of a frame of a video from a position inside a predetermined area near a loading door separating the storage facility and the platform.

6. The fallen person detection system according to claim 5, wherein, in a case where a person is detected inside the storage facility at the first time point, the fallen person determination unit checks an analysis result for an image, among the second image data for up to the predetermined time before the first time point, capturing the loading door at a position corresponding to an area inside the storage facility where the person is detected.

7. The fallen person detection system according to claim 5 or 6, wherein the fallen person determination unit determines absence of the fallen person in a case where a person moves out of the frame of the video from a position outside the predetermined area near the loading door when checking the analysis result for the second image data for up to the predetermined time before the first time point.

8. The fallen person detection system according to any one of claim 5 to 7, wherein the fallen person determination unit determines absence of the fallen person in a case where entry of a person into the predetermined area near the loading door is not detected when checking the analysis result for the second image data for up to the predetermined time before the first time point.

9. The fallen person detection system according to any one of claims 1 to 8, further comprising an instruction unit for performing at least one of processes in a case where presence of the fallen person is determined by the fallen person determination unit, the processes including
(1) issuing an alert,
(2) transmitting a control signal to a crane control device such that a crane for mixing or conveying the object to be processed that is stored in the storage facility is stopped,
(3) transmitting a control signal to a loading door control device such that a loading door separating the storage facility and the platform is closed,
(4) transmitting a control signal to the crane control device such that the crane is operated to rescue the fallen person, and
(5) transmitting a control signal to a rescue equipment control device such that rescue equipment provided at the storage facility is operated to rescue the fallen person.

10. The fallen person detection system according to any one of claims 1 to 9, wherein the first image analysis unit detects a person inside the storage facility by using a first detection algorithm and taking new image data of the inside of the storage facility as an input, the first detection algorithm being constructed by performing machine learning on first training data that is prepared by adding an artificial label, as information, to past image data of the inside of the storage facility, the artificial label being added to an area including a person or a dummy doll representing a person.

11. The fallen person detection system according to any one of claims 1 to 10, wherein the second image analysis unit detects a person inside the platform by using a second detection algorithm and taking new image data of the inside of the platform as an input, the second detection algorithm being constructed by performing machine learning on second training data that is prepared by adding an artificial label, as information, to past image data of the inside of the platform, the artificial label being added to an area including a person or a dummy doll representing a person.

12. The fallen person detection system according to claim 11, wherein the second training data is prepared by adding the artificial label, as information, to the area including a person or a dummy doll representing a person and by adding another artificial label, as information, to an area including a conveying vehicle, the artificial labels being added to past image data of the inside of the platform.

13. The fallen person detection system according to claim 11 or 12 citing claim 10, wherein
the first detection algorithm includes one or two or more among the statistical estimation using maximum likelihood classification, a Boltzmann machine, a neural network, a support vector machine, a Bayesian network, sparse regression, a decision tree, and random forest, reinforcement learning, and deep learning, and
the second detection algorithm includes one or two or more among the statistical estimation using the maximum likelihood classification, the Boltzmann machine, the neural network, the support vector machine, the Bayesian network, the sparse regression, the decision tree, and the random forest, the reinforcement learning, and the deep learning.

14. The fallen person detection system according to any one of claims 1 to 13, wherein an algorithm used by the second image analysis unit to track the trajectory of the person includes one or two or more among an optical flow, background subtraction, a Kalman filter, a particle filter, and deep learning.

15. The fallen person detection system according to any one of claims 1 to 14, wherein
the first camera includes one or two or more among an RGB camera, a near-infrared camera, a 3D camera, or an RGB-D camera, and
the second camera includes one or two or more among the RGB camera, the near-infrared camera, the 3D camera, or the RGB-D camera.

16. A waste treatment facility comprising the fallen person detection system according to any one of claims 1 to 15.

17. A fallen person detection method comprising the steps of:
acquiring first image data from a first camera for capturing inside of a storage facility where an object to be processed is stored;
acquiring second image data from a second camera for capturing inside of a platform that is adjacent to the storage facility;
detecting a person inside the storage facility by performing image analysis on the first image data;
detecting a person inside the platform by performing image analysis on the second image data, and tracking a trajectory of the person who is detected; and
determining presence/absence of a fallen person fallen from the platform into the storage facility, based on a combination of an analysis result for the first image data and an analysis result for the second image data.

18. A fallen person detection program for causing a computer to perform:
acquiring first image data from a first camera for capturing inside of a storage facility where an object to be processed is stored;
acquiring second image data from a second camera for capturing inside of a platform that is adjacent to the storage facility;
detecting a person inside the storage facility by performing image analysis on the first image data;
detecting a person inside the platform by performing image analysis on the second image data, and tracking a trajectory of the person who is detected; and
determining presence/absence of a fallen person fallen from the platform into the storage facility, based on a combination of an analysis result for the first image data and an analysis result for the second image data.
